# EUROPEAN PATENT SPECIFICATION

(11) **EP 3 412 047 B1**
(45) Date of publication and mention of the grant of the patent: **05.01.2022**
(21) Application number: 16889100.0
(22) Date of filing: 11.11.2016
(51) Int. Cl.: H04W 4/24, H04L 12/14, H04M 15/00, H04L 12/46

(54) **METHOD AND NETWORK ENTITY FOR CONTROL OF CHARGING FOR VALUE ADDED SERVICE (VAS)**
VERFAHREN UND NETZWERKEINHEIT ZUR KONTROLLE DER ABRECHNUNG VON MEHRWERTDIENSTEN (VAS)
PROCÉDÉ ET ENTITÉ DE RÉSEAU DESTINÉ À LA COMMANDE D'UNE FACTURATION POUR UN SERVICE À VALEUR AJOUTÉE (VAS)

(30) Priority: 01.02.2016 WO PCT/CN2016/073051
(43) Date of publication of application: 12.12.2018
(60) Divisional application: 21202851.8
(73) Proprietor: Telefonaktiebolaget LM Ericsson (publ), 164 83 Stockholm (SE)
(72) Inventor: ZHANG, Shunliang, Beijing (CN); CAI, Xuejun, 187 53 Täby (SE)
(74) Representative: Hoffmann Eitle
(86) International application number: PCT/CN2016/105438
(87) International publication number: WO 2017/133293

(56) References cited:
- EP-A1- 2 768 196
- WO-A1-2009/024056
- WO-A1-2010/094188
- WO-A1-2014/040652
- WO-A1-2016/001727
- CN-A- 102 612 011
- CN-A- 102 612 011
- US-A1- 2011 264 726

## Description

### TECHNICAL FIELD

The present disclosure relates to communication technology, and more particularly, to a method and a network entity for control of charging for Value Added Service (VAS).

### BACKGROUND

With quick development of various smart phone applications and Machine to Machine (M2M) applications, mobile network operators are becoming "pipe" providers and trying to provide users with various Value Added Services (VASs), such as security protection, anti-advertisement service, video optimization/acceleration, web cache/Content Distribution Network (CDN), Hyper Text Transfer Protocol (HTTP) header enrichment and Transmission Control Protocol (TCP)/HTTP optimization. Further, service providers, e.g., Over The Top (OTT) service providers, may desire to sponsor some VASs so as to provide their subscribers with improved experiences.

Conventionally, a network operator can provide a package of VASs to a user based on the user's subscription to the operator and/or the operator's operation policies. Such package of VASs is typically static. The routing topology, i.e., the VAS servers through which the user traffic is to be routed, is also static. Accordingly, the network operator sets a fixed charging policy, e.g., a fixed charging rate, for the user based on his/her subscription to network operator.

With the Defined Network (SDN) technique, it is now possible to dynamically change the routing topology and thus the VASs to be provided to the user. The SDN technique provides open interfaces enabling upper layer application to control the connectivity provided by a set of network resources and the flow of network traffic through them, along with possible inspection and modification of traffic that may be performed in the network. The SDN architecture is described in the Open Networking Foundation (ONF) white paper *"Software-Defined Networking: The New Norm for Networks",* which is available at *https:*//*www.opennetworking.org*/*images*/*stories*/*downloads*/*sdn-resources*/*white-pape rs*/*wp-sdn-newnorm.pdf.*

In this case, it is desired to provide a more flexible charging policy such that the VASs can be charged for properly while taking the needs of user, network operators and sponsors into account.

CN102612011 according to a machine translation discloses a kind of charging control strategy switches in real time, methods described include: Strategy when judging that user meets charging policy switching condition, sends a notification message, wherein charging policy and Charging-Address after switching corresponding to carrying with charging rule functions (PCRF) to strategy with charge execution function (PCEF); After PCEF receives the notification message, corresponding Charging-Address is selected to carry out charging to the user according to the charging policy after the switching. The system includes: PCRF, for when judging that user meets charging policy switching condition, being sent a notification message to PCEF, wherein charging policy and Charging-Address after switching corresponding to carrying; PCEF, for after the notification message is received, selecting corresponding Charging-Address to carry out charging to the user according to the charging policy after above-mentioned switching. The charging policy of user can be more flexibly controlled using the present invention, to reach the reasonability of charging, real-time and accuracy.

From US 20110264726A1 metering of telecommunications services is known, with a configurator that connects with various disparate elements in a telecommunication system. The configurator is adapted to receive a traffic plan that has a plurality of different aspects that are implemented across the disparate elements. The configurator is adapted to generate processing schemas and/or databases that can be used by the disparate elements in order to implement the traffic plan.

EP 2 768 196 A1 discloses a method and a device for controlling service transmission can implement service forwarding based on dynamic information about a user and perform service arrangement flexibly for a value-added service subscribed by a user. The method includes: receiving a connection request message sent by a piece of user equipment that transmits a service, where the connection request message includes user information of the user equipment; determining value-added service system VAS information according to the user information, where the VAS information is used to indicate at least one destination VAS of the service; receiving a first data packet of the service that is sent by a sending end; obtaining, according to the VAS information, a second data packet from the at least one destination VAS, where the second data packet is a data packet obtained after the at least one destination VAS performs value-added processing on the first data packet; and sending the second data packet to a receiving end. A VAS performs value-added processing on a data packet, and returns the data packet to a gateway device. allowing the gateway device to perform service arrangement flexibly according to dynamic information about a user.

From WO2016001727A1 a policy and charging control method and apparatus for an application service chain based on an SDN network are known. PCRF determines an application service chain for an application based on multi-dimensional context information corresponding to the application, and transmits the corresponding application service chain information to an SDN controller; the SDN controller determines a forwarding rule for the application based on the application service chain information, and transmits the forwarding rule to a corresponding service chaining infrastructure network; SCEP(s) in the service chaining infrastructure network perform corresponding service function based on the forwarding rule.

### SUMMARY

It is an object of the present disclosure to provide a method and a network entity for control of charging for VAS, capable of allowing a set of VASs to be charged for in a dynamic and flexible manner.

The present invention is defined in the appended independent claims. Embodiments of the invention are given in the dependent claims.

With the embodiments of the present disclosure, a VAS charging policy is generated for a user traffic based on a VAS provision status indicating a set of VASs provided for the user traffic. In this way, the VAS charging policy may vary dynamically depending on the VASs currently being provided for the user traffic. Accordingly, the generated VAS charging policy can be transmitted to another network entity which then applies the policy to the user traffic.

### BRIEF DESCRIPTION OF THE DRAWINGS

The above and other objects, features and advantages will be more apparent from the following description of embodiments with reference to the figures, in which:
Fig. 1 is a schematic diagram showing a network environment where the present disclosure is applied;
Fig. 2 is a flowchart illustrating a method for control of charging for VAS according to an embodiment of the present disclosure;
Fig. 3 is a flowchart illustrating a method for facilitating charging for VAS according to an embodiment of the present disclosure;
Fig. 4 is a sequence chart explaining a first implementation of the methods shown in Figs. 2 and 3;
Fig. 5 is a sequence chart explaining a second implementation of the methods shown in Figs. 2 and 3;
Fig. 6 is a block diagram of a network entity for control of charging for VAS according to an embodiment of the present disclosure;
Fig. 7 is a block diagram of a network entity for facilitating charging for VAS according to an embodiment of the present disclosure; and
Fig. 8 is a block diagram of a network entity according to another embodiment of the present disclosure.

### DETAILED DESCRIPTION

The embodiments of the disclosure will be detailed below with reference to the drawings. It should be noted that the following embodiments are illustrative only, rather than limiting the scope of the disclosure.

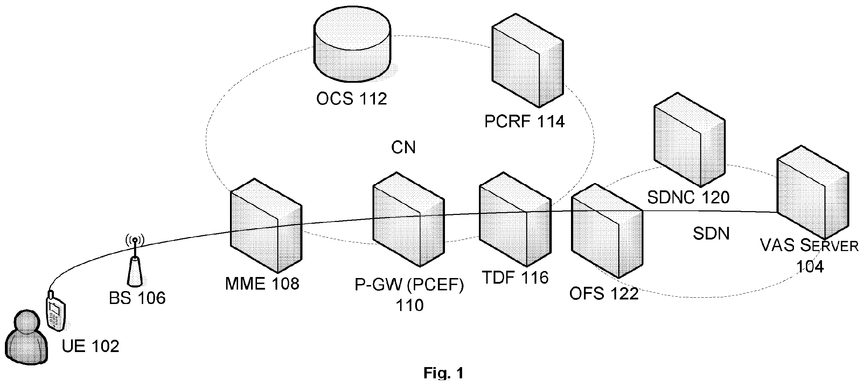

Fig. 1 is a schematic diagram showing a network environment where the present disclosure is applied. Fig. 1 shows a data path of user traffic from a User Equipment (UE) 102, via an Access Network (AN) (including a Base Station (BS) 106) and a Core Network (CN) (including a Mobility Management Entity (MME) 108 and a Packet Data Network Gateway (P-GW) 110) of a network operator, to a VAS server 104 in an SDN controlled by an SDNC 120. The SDNC 120 controls routing of the user traffic in the SDN by providing an Open Flow (OF) configuration to the Open Flow Switch (OFS) 122. The CN can further include an Online Charging System (OCS) 112 for monitoring and providing charging information related to the user, e.g., information on a balance in the user's account; a Policy and Charging Rules Function (PCRF) entity 114 for policy and charging control; and a Traffic Detection Function (TDF) entity 116 for traffic detection.

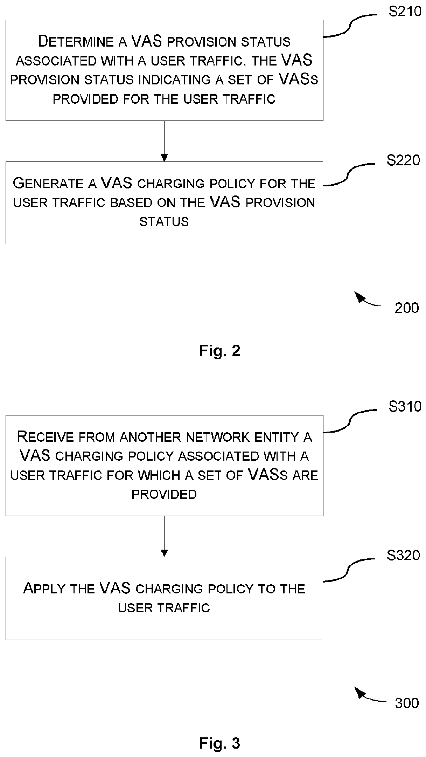

Fig. 2 is a flowchart illustrating a method 200 for control of charging for VAS according to an embodiment of the present disclosure. The method 200 is performed at a network entity for VAS charging control, e.g., the PCRF entity 114 of Fig. 1.

At step S210, a VAS provision status associated with a user traffic is determined. The VAS provision status indicates a set of VASs provided for the user traffic. For example, the VAS provision status may indicate each VAS that is currently provided for the user traffic.

At step S220, a VAS charging policy for the user traffic is generated based on the VAS provision status. That is, the VAS charging policy may vary depending on the set of VASs provided for the user traffic. The VAS charging policy as used herein refers to a policy for charging a user account for the set of VASs applied to the user traffic, including e.g., charging rate, charging scheme (online/offline), etc.

The network entity receives from another network entity a measurement report associated with the set of VASs and adapt the VAS charging policy based on the measurement report. Here, the other network entity can be e.g., a Policy and Charging Enforcement Function (PCEF) entity (which can be located at the P-GW 110 in Fig. 1) or a TDF entity (e.g., the TDF 116 in Fig. 1). Alternatively, the other network entity can be e.g., an SDNC (e.g., the SDNC 120 in Fig. 1). In this case, a Traffic Steering Support Function (TSSF) entity (not shown in Fig. 1) can serve as an interface between the SDNC 120 and the PCRF entity 114.

Here, the measurement report can indicate a time length and/or a traffic volume that have been consumed by the user traffic in relation to each VAS in the set or a charging event associated with each VAS in the set. For example, when a time length that has been consumed by the user traffic in relation to a VAS in the set has exceeded a predetermined period, e.g., 5 hours, or when a traffic volume that has been consumed by the user traffic in relation to a VAS in the set has exceeded a predetermined volume, e.g., 10 GB, the VAS charging policy can be adapted such that the charging rate for the VAS can be reduced. As another example, when the charging event associated with a VAS in the set occurs (e.g., the number of times the VAS has been applied to the user traffic), the VAS charging policy can be adapted such that the charging rate for the VAS can be reduced.

The VAS charging policy includes a charging key for the set of VASs. The charging key can be translated into a charging rate to be applied to the user traffic. When a uniform charging rate is to be applied for the VASs in the set, a charging key applicable to all the VASs in the set can be provided. In an example, in addition to the VAS provision status, the charging key can be further dependent on a VAS consumption status indicating a time length and/or a traffic volume that have been consumed by the user traffic in relation to each VAS in the associated subset. For example, the charging rate may vary as the time length and/or the traffic volume that have been consumed by the user traffic in relation to each VAS in the set increase. Alternatively or additionally, the charging key can be further dependent on a VAS sponsor status of each VAS in the set. For example, when each VAS in the set is sponsored by a third party, the set of VASs can be free of charge. Alternatively or additionally, the charging key can be further dependent on a service provision policy of each VAS in the set. Here the service provision policy may include business strategies of VAS service providers, network operators and/or 3^{rd} party service providers. For example, the charging rate may vary depending on different service providers.

The charging key includes one or more sub charging keys each associated with a subset in the set of VASs. Each sub charging key can be translated into a charging rate for its associated subset. Similarly, in addition to the VAS provision status, each sub charging key is further dependent on a VAS consumption status indicating a time length and/or a traffic volume that have been consumed by the user traffic in relation to each VAS in the associated subset, a VAS sponsor status of each VAS in the associated subset, and/or a service provision policy of each VAS in the associated subset.

In an example, the VAS charging policy can further include an online and/or offline charging scheme for the set of VASs. When a uniform charging scheme (online or offline) is to be applied for the VASs in the set, a charging scheme applicable to all the VASs in the set can be provided. Alternatively or additionally, the online and/or offline charging scheme can include one or more sub charging schemes each associated with a subset of the set of VASs. In this case, each sub charging scheme indicates an online and/or offline charging scheme for the each VAS in its associated subset.

Further, the VAS charging policy may include a VAS charging policy identifier (ID). The VAS charging policy may also include traffic description information associated with the user traffic. The traffic description information contains information on traffic type, OTT provider and/or VAS provider associated with the user traffic. With the VAS charging policy ID and the traffic description information, upon receiving the VAS charging policy, the other network entity (e.g., PCEF, TDF or SDNC) can establish a correspondence between the VAS charging policy and the user traffic the VAS charging policy is to be applied to.

Fig. 3 is a flowchart illustrating a method 300 for facilitating charging for VAS. The method 300 can be performed at a network entity for VAS charging enforcement, e.g., a PCEF entity (which can be located at the P-GW 110 in Fig. 1) or a TDF entity (e.g., the TDF 116 in Fig. 1). Alternatively, the method 300 can be performed at e.g., an SDNC (e.g., the SDNC 120 in Fig. 1).

At step S310, a VAS charging policy is received from another network entity. The VAS charging policy is associated with a user traffic for which a set of VASs are provided. Here the other network entity can be e.g., a PCRF entity (e.g., PCRF 114 in Fig. 1). The VAS charging policy can be generated in accordance with the method 200 as described above in connection with Fig. 2 and thus details thereof will be omitted here for simplicity.

At step S320, the VAS charging policy is applied to the user traffic. For example, the network entity can apply the charging key (or sub charging keys) and the online/offline charging scheme (or sub charging schemes) to the user traffic, so as to generate charging information and send it to e.g., the OCS 112 which finally charges the user account for the VASs.

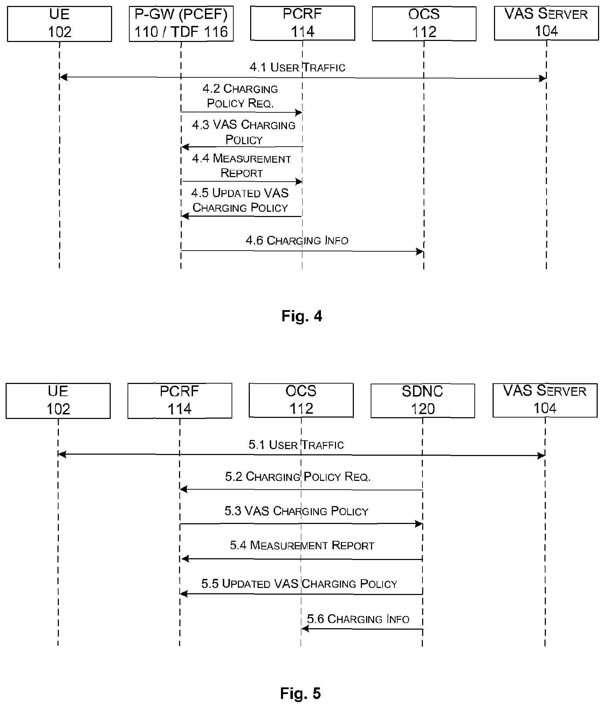

Fig. 4 is a sequence chart explaining a first implementation of the methods 200 and 300.

As shown in Fig. 4, at 4.1, a user traffic is established between the UE 102 and the VAS server 104, via the P-GW 110 or TDF entity 116 and the OFS 122 (not shown). A set of VASs are provided for the user traffic by the VAS server 104 (and possibly other VAS servers). At 4.2, the PCEF entity co-located with the P-GW 110 or TDF entity 116 sends a request for a VAS charging policy to the PCRF entity 114. The PCRF entity 114 generates a VAS charging policy based on a VAS provision status associated with the user traffic. At 4.3, the PCRF entity 114 sends the generated VAS charging policy to the PCEF entity or the TDF entity 116. The PCEF entity or the TDF entity 116 measures e.g., the time length and/or the traffic volume that have been consumed by the user traffic in relation to the VASs and sends a VAS-related measurement report to the PCRF entity 114 at 4.4. Based on the measurement report, the PCRF 114 updates the VAS charging policy and sends the updated VAS charging policy to the PCEF entity or the TDF entity 116 at 4.5. The PCEF entity or the TDF entity 116 applies the VAS charging policies to the user traffic to generate charging information and sends it to the OCS 112 at 4.6, such that the OCS 112 can finally charge the user account for the VASs

Fig. 5 is a sequence chart explaining a second implementation of the methods 200 and 300.

As shown in Fig. 5, at 5.1, a user traffic is established between the UE 102 and the VAS server 104, via the P-GW 110 and the OFS 122 (not shown). A set of VASs are provided for the user traffic by the VAS server 104 (and possibly other VAS servers). At 5.2, the SDNC 120 sends a request for a VAS charging policy to the PCRF entity 114. The PCRF entity 114 generates a VAS charging policy based on a VAS provision status associated with the user traffic. At 5.3, the PCRF entity 114 sends the generated VAS charging policy to the SDNC 120. The SDNC 120 measures e.g., the time length and/or the traffic volume that have been consumed by the user traffic in relation to the VASs and sends a VAS-related measurement report to the PCRF entity 114 at 5.4. Based on the measurement report, the PCRF 114 updates the VAS charging policy and sends the updated VAS charging policy to the SDNC 120 at 5.5. The SDNC 120 applies the VAS charging policies to the user traffic to generate charging information and sends it to the OCS 112 at 5.6, such that the OCS 112 can finally charge the user account for the VASs

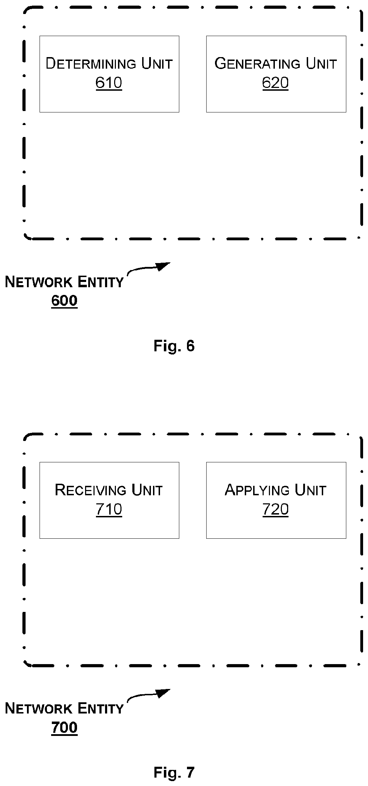

Correspondingly to the method 200 as described above, a network entity is provided. Fig. 6 is a block diagram of a network entity 600 for control of charging for VAS according to an embodiment of the present disclosure. The network entity 600 can be e.g., the PCRF entity 114 of Fig. 1.

As shown in Fig. 6, the network entity 600 includes a determining unit 610 configured to determine a VAS provision status associated with a user traffic. The VAS provision status indicates a set of VASs provided for the user traffic. The network entity 600 further includes a generating unit 620 configured to generate a VAS charging policy for the user traffic based on the VAS provision status.

The network entity 600 further includes a receiving unit (not shown) configured to receive from another network entity a measurement report associated with the set of VASs. The network entity 600 further includes an adapting unit (not shown) configured to adapt the VAS charging policy based on the measurement report.

In an embodiment, the measurement report indicates a time length and/or a traffic volume that have been consumed by the user traffic in relation to each VAS in the set or a charging event associated with each VAS in the set.

The VAS charging policy comprises a charging key for the set of VASs.

In an embodiment, the charging key is further dependent on: a VAS consumption status indicating a time length and/or a traffic volume that have been consumed by the user traffic in relation to each VAS in the set, a VAS sponsor status of each VAS in the set, and/or a service provision policy of each VAS in the set.

The charging key comprises one or more sub charging keys each associated with a subset in the set of VASs.

Each sub charging key is further dependent on: a VAS consumption status indicating a time length and/or a traffic volume that have been consumed by the user traffic in relation to each VAS in the associated subset, a VAS sponsor status of each VAS in the associated subset, and/or a service provision policy of each VAS in the associated subset.

In an embodiment, the VAS charging policy further comprises an online and/or offline charging scheme for the set of VASs.

In an embodiment, the online and/or offline charging scheme comprises one or more sub charging schemes each associated with a subset of the set of VASs.

In an embodiment, the VAS charging policy comprises a VAS charging policy identifier (ID).

In an embodiment, the VAS charging policy comprises traffic description information associated with the user traffic.

In an embodiment, the network entity 600 is a Policy and Charging Rules Function (PCRF) entity.

In an embodiment, the other network entity is a Policy and Charging Enforcement Function (PCEF) entity, a Traffic Detection Function (TDF) entity, or a Software Defined Networking Controller (SDNC).

Each of the units 610-620 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 2.

Correspondingly to the method 300 as described above, a network entity is provided. Fig. 7 is a block diagram of a network entity 700 for facilitating charging for VAS. The network entity 700 can be e.g., the PCEF entity, the TDF entity 116 or the SDNC 120 of Fig. 1.

As shown in Fig. 7, the network entity 700 includes a receiving unit 710 configured to receive from another network entity a VAS charging policy associated with a user traffic for which a set of VASs are provided. The network entity 700 further includes an applying unit 720 configured to apply the VAS charging policy to the user traffic.

The network entity 700 further includes a measuring unit (not shown) configured to measure a time length and/or a traffic volume that have been consumed by the user traffic in relation to each VAS in the set or a charging event associated with each VAS in the set, so as to generate a measurement report. The network entity 700 further includes a transmitting unit (not shown) configured to transmit the measurement report to the other network entity.

The VAS charging policy comprises a charging key for the set of VASs.

The charging key is further dependent on: a VAS consumption status indicating a time length and/or a traffic volume that have been consumed by the user traffic in relation to each VAS in the set, a VAS sponsor status of each VAS in the set, and/or a service provision policy of each VAS in the set.

The charging key comprises one or more sub charging keys each associated with a subset in the set of VASs.

Each sub charging key is further dependent on: a VAS consumption status indicating a time length and/or a traffic volume that have been consumed by the user traffic in relation to each VAS in the associated subset, a VAS sponsor status of each VAS in the associated subset, and/or a service provision policy of each VAS in the associated subset.

In an embodiment, the VAS charging policy further comprises an online and/or offline charging scheme for the set of VASs.

In an embodiment, the online and/or offline charging scheme comprises one or more sub charging schemes each associated with a subset of the set of VASs.

In an embodiment, the VAS charging policy comprises a VAS charging policy identifier (ID).

In an embodiment, the VAS charging policy comprises traffic description information associated with the user traffic.

In an embodiment, the network entity is a Policy and Charging Enforcement Function (PCEF) entity, a Traffic Detection Function (TDF) entity, or a Software Defined Networking Controller (SDNC). The other network entity is a Policy and Charging Rules Function (PCRF) entity.

Each of the units 710-720 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 3.

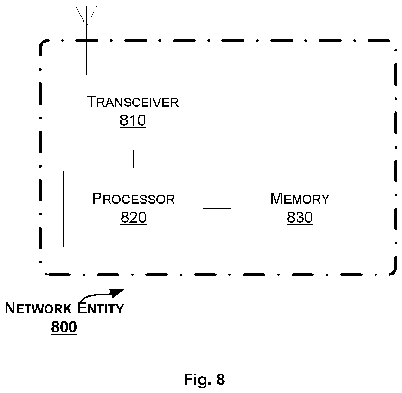

Fig. 8 is a block diagram of a network entity 800.

The network entity 800 can be provided for control of charging for VAS. The network entity 800 includes a transceiver 810, a processor 820 and a memory 830. The memory 830 contains instructions executable by the processor 820 whereby the network entity 800 is operative to: determine a VAS provision status associated with a user traffic, the VAS provision status indicating a set of VASs provided for the user traffic; and generate a VAS charging policy for the user traffic based on the VAS provision status.

Alternatively, the network entity 800 can be provided for facilitating charging for VAS. Accordingly, the network entity 800 includes a transceiver 810, a processor 820 and a memory 830. The memory 830 contains instructions executable by the processor 820 whereby the network entity 800 is operative to: receive from another network entity a VAS charging policy associated with a user traffic for which a set of VASs are provided; and apply the VAS charging policy to the user traffic.

The present disclosure also provides at least one computer program product in the form of a non-volatile or volatile memory, e.g., an Electrically Erasable Programmable Read-Only Memory (EEPROM), a flash memory and a hard drive. The computer program product includes a computer program. The computer program includes: code/computer readable instructions, which when executed by the processor 820 causes the network entity 800 to perform the actions, e.g., of the procedure described earlier in conjunction with Fig. 2 or 3.

The computer program product may be configured as a computer program code structured in computer program modules. The computer program modules could essentially perform the actions of the flow illustrated in Fig. 2 or 3.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a computer readable medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

The scope of the disclosure is not limited to the above particular embodiments but only defined by the claims as attached.

## Claims

1. A method (200) in a network entity for control of charging for Value Added Service (VAS), comprising:
- determining (S210) a VAS provision status associated with a user traffic, the VAS provision status indicating a set of VASs currently provided for the user traffic; and
- generating (S220) a VAS charging policy for charging a user account for the user traffic based on the VAS provision status;
- wherein the VAS charging policy comprises a charging key for the set of VASs;
- wherein the charging key comprises one or more sub charging keys each associated with a subset in the set of VASs;
- receiving from another network entity a measurement report associated with the set of VASs;
- wherein each sub charging key is further dependent on:
- a VAS consumption status indicating a time length and/or a traffic volume that have been consumed by the user traffic in relation to each VAS in the associated subset,
- a VAS sponsor status of each VAS in the associated subset, and/or
- a service provision policy of each VAS in the associated subset, and
- adapting the VAS charging policy based on the measurement report associated with the consumption status, wherein each of the plurality of charging keys is based on the VAS consumption status in relation to each VAS in the subset of VASs.

2. The method (200) of claim 1, wherein the measurement report indicates a time length and/or a traffic volume that have been consumed by the user traffic in relation to each VAS in the set or a charging event associated with each VAS in the set.

3. The method (200) of any of claims 1-2, wherein the VAS charging policy further comprises an online and/or offline charging scheme for the set of VASs.

4. The method (200) of claim 3, wherein the online and/or offline charging scheme comprises one or more sub charging schemes each associated with a subset of the set of VASs.

5. The method (200) of any of claims 1-4, wherein the VAS charging policy comprises a VAS charging policy identifier (ID).

6. The method (200) of any of claims 1-5, wherein the VAS charging policy comprises traffic description information associated with the user traffic.

7. The method (200) of any of claims 1-6, wherein the network entity is a Policy and Charging Rules Function (PCRF) entity.

8. The method (200) of claim 1, wherein the other network entity is a Policy and Charging Enforcement Function (PCEF) entity, a Traffic Detection Function (TDF) entity, or a Software Defined Networking Controller (SDNC).

9. A network entity (600) for control of charging for Value Added Service (VAS), comprising:
- a determining unit (610) configured to determine a VAS provision status associated with a user traffic, the VAS provision status indicating a set of VASs provided for the user traffic; and
- a generating unit (620) configured to generate a VAS charging policy for charging a user account for the user traffic based on the VAS provision status;
- wherein the VAS charging policy comprises a charging key for the set of VASs;
- wherein the charging key comprises one or more sub charging keys each associated with a subset in the set of VASs;
the network entity (600) further comprising:
- a receiving unit configured to receive from another network entity a measurement report associated with the set of VASs;
- wherein each sub charging key is further dependent on:
- a VAS consumption status indicating a time length and/or a traffic volume that have been consumed by the user traffic in relation to each VAS in the associated subset,
- a VAS sponsor status of each VAS in the associated subset, and/or
- a service provision policy of each VAS in the associated subset, and
- an adapting unit configured to adapt the VAS charging policy based on the measurement report associated with the consumption status, wherein each of the plurality of charging keys is based on the VAS consumption status in relation to each VAS in the subset of VASs.

10. The network entity (600) of claim 9, wherein the measurement report indicates a time length and/or a traffic volume that have been consumed by the user traffic in relation to each VAS in the set or a charging event associated with each VAS in the set.

11. The network entity (600) of any of claims 9-10, wherein the VAS charging policy further comprises an online and/or offline charging scheme for the set of VASs.

12. The network entity (600) of claim 11, wherein the online and/or offline charging scheme comprises one or more sub charging schemes each associated with a subset of the set of VASs.

13. The network entity (600) of any of claims 9-12, wherein the VAS charging policy comprises a VAS charging policy identifier (ID).

14. The network entity (600) of any of claims 9-13, wherein the VAS charging policy comprises traffic description information associated with the user traffic.

15. The network entity (600) of any of claims 9-14, wherein the network entity is a Policy and Charging Rules Function (PCRF) entity.

## Patentansprüche

1. Verfahren (200) in einer Netzwerkentität zur Kontrolle der Vergebührung für einen Mehrwertdienst (VAS), umfassend:
- Bestimmen (S210) eines VAS-Bereitstellungsstatus, der mit einem Benutzerverkehr verknüpft ist, wobei der VAS-Bereitstellungsstatus einen Satz von VAS angibt, die aktuell für den Benutzerverkehr bereitgestellt werden; und
- Erzeugen (S220) einer VAS-Vergebührungsrichtlinie zur Vergebührung eines Benutzerkontos für den Benutzerverkehr basierend auf dem VAS-Bereitstellungsstatus;
- wobei die VAS-Vergebührungsrichtlinie einen Vergebührungsschlüssel für den Satz von VAS umfasst;
- wobei der Vergebührungsschlüssel einen oder mehrere Untervergebührungsschlüssel umfasst, die jeweils mit einem Teilsatz in dem Satz von VAS verknüpft sind;
- Empfangen eines Messberichts von einer anderen Netzwerkentität, der mit dem Satz von VAS verknüpft ist;
- wobei jeder Vergebührungsschlüssel weiter abhängig ist von:
- einem VAS-Verbrauchsstatus, der eine Zeitdauer und/oder ein Verkehrsvolumen angibt, die durch den Benutzerverkehr in Bezug auf jeden VAS in dem verknüpften Teilsatz verbraucht wurden,
- einem VAS-Sponsorstatus jedes VAS in dem verknüpften Teilsatz und/oder
- einer Dienstbereitstellungsrichtlinie für jeden VAS in dem verknüpften Teilsatz, und
- Anpassen der VAS-Vergebührungsrichtlinie basierend auf dem mit dem Verbrauchsstatus verknüpften Messbericht, wobei jeder der Vielzahl von Vergebührungsschlüsseln auf dem VAS-Verbrauchsstatus in Bezug auf jeden VAS in dem Teilsatz von VAS basiert.

2. Verfahren (200) nach Anspruch 1, wobei der Messbericht eine Zeitdauer und/oder ein Verkehrsvolumen angibt, die bzw. das durch den Benutzerverkehr in Bezug auf jeden VAS in dem Satz oder ein mit jedem VAS in dem Satz verknüpften Vergebührungsereignis verbraucht worden ist.

3. Verfahren (200) nach einem der Ansprüche 1-2, wobei die VAS-Vergebührungsrichtlinie weiter ein Online- und/oder Offline-Vergebührungsschema für den Satz von VAS umfasst.

4. Verfahren (200) nach Anspruch 3, wobei das Online- und/oder Offline-Vergebührungsschema ein oder mehrere Unter-Verbührungsschemata umfasst, die jeweils mit einem Teilsatz des Satzes von VAS verknüpft sind.

5. Verfahren (200) nach einem der Ansprüche 1-4, wobei die VAS-Vergebührungsrichtlinie eine VAS-Vergebührungsrichtlinien-Identifizierung (ID) umfasst.

6. Verfahren (200) nach einem der Ansprüche 1-5, wobei die VAS-Vergebührungsrichtlinie Verkehrsbeschreibungsinformationen umfasst, die mit dem Benutzerverkehr verknüpft sind.

7. Verfahren (200) nach einem der Ansprüche 1-6, wobei die Netzwerkentität eine Entität der Vorschriften- und Gebührenregelfunktion (PCRF) ist.

8. Verfahren (200) nach Anspruch 1, wobei die andere Netzwerkentität eine Entität der Richtlinien- und Vergebührungsdurchsetzungsfunktion (PCEF), eine Entität der Verkehrsdetektionsfunktion (TDF) oder eine Software-definierte Netzwerksteuerung (SDNC) ist.

9. Netzwerkentität (600) zur Kontrolle der Vergebührung eines Mehrwertdienstes (VAS), umfassend:
- eine Bestimmungseinheit (610), die konfiguriert ist, um einen VAS-Bereitstellungsstatus, der mit einem Benutzerverkehr verknüpft ist, zu bestimmen, wobei der VAS-Bereitstellungsstatus einen Satz von VAS angibt, die für den Benutzerverkehr bereitgestellt werden; und
- eine Erzeugungseinheit (620), die konfiguriert ist, um eine VAS-Vergebührungsrichtlinie zur Vergebührung eines Benutzerkontos für den Benutzerverkehr basierend auf dem VAS-Bereitstellungsstatus zu erzeugen;
- wobei die VAS-Vergebührungsrichtlinie einen Vergebührungsschlüssel für den Satz von VAS umfasst;
- wobei der Vergebührungsschlüssel einen oder mehrere Untervergebührungsschlüssel umfasst, die jeweils mit einem Teilsatz in dem Satz von VAS verknüpft sind;
wobei die Netzwerkentität (600) weiter umfasst:
- eine Empfangseinheit, die konfiguriert ist, um einen Messbericht von einer anderen Netzwerkentität zu empfangen, der mit dem Satz von VAS verknüpft ist;
- wobei jeder Vergebührungsschlüssel weiter abhängig ist von:
- einem VAS-Verbrauchsstatus, der eine Zeitdauer und/oder ein Verkehrsvolumen angibt, die durch den Benutzerverkehr in Bezug auf jeden VAS in dem verknüpften Teilsatz verbraucht wurden,
- einem VAS-Sponsorstatus jedes VAS in dem verknüpften Teilsatz und/oder
- einer Dienstbereitstellungsrichtlinie für jeden VAS in dem verknüpften Teilsatz, und
- einer Anpassungseinheit, die konfiguriert ist, um die VAS-Vergebührungsrichtlinie basierend auf dem mit dem Verbrauchsstatus verknüpften Messbericht anzupassen, wobei jeder der Vielzahl von Vergebührungsschlüsseln auf dem VAS-Verbrauchsstatus in Bezug auf jeden VAS in dem Teilsatz von VAS basiert.

10. Netzwerkentität (600) nach Anspruch 9, wobei der Messbericht eine Zeitdauer und/oder ein Verkehrsvolumen angibt, die bzw. das durch den Benutzerverkehr in Bezug auf jeden VAS in dem Satz oder ein mit jedem VAS in dem Satz verknüpften Vergebührungsereignis verbraucht worden ist.

11. Netzwerkentität (600) nach einem der Ansprüche 9-10, wobei die VAS-Vergebührungsrichtlinie weiter ein Online- und/oder Offline-Vergebührungsschema für den Satz von VAS umfasst.

12. Netzwerkentität (600) nach Anspruch 11, das Online- und/oder Offline-Vergebührungsschema ein oder mehrere Unter-Verbührungsschemata umfasst, die jeweils mit einem Teilsatz des Satzes von VAS verknüpft sind.

13. Netzwerkentität (600) nach einem der Ansprüche 9-12, wobei die VAS-Vergebührungsrichtlinie eine VAS-Vergebührungsrichtlinien-Identifizierung (ID) umfasst.

14. Netzwerkentität (600) nach einem der Ansprüche 9-13, wobei die VAS-Vergebührungsrichtlinie Verkehrsbeschreibungsinformationen umfasst, die mit dem Benutzerverkehr verknüpft sind.

15. Netzwerkentität (600) nach einem der Ansprüche 9-14, wobei die Netzwerkentität eine Entität der Vorschriften- und Gebührenregelfunktion (PCRF) ist.

## Revendications

1. Procédé (200) dans une entité de réseau pour une commande de facturation pour un service à valeur ajoutée (VAS), comprenant :
- une détermination (S210) d'un statut de fourniture de VAS associé à un trafic utilisateur, le statut de fourniture de VAS indiquant un ensemble de VAS couramment fourni pour le trafic utilisateur ; et
- une génération (S220) d'une politique de facturation de VAS pour facturer un compte utilisateur pour le trafic utilisateur sur la base du statut de fourniture de VAS ;
- dans lequel la politique de facturation de VAS comprend une clé de facturation pour l'ensemble de VAS ;
- dans lequel la clé de facturation comprend une ou plusieurs clés de facturation secondaires, chacune associée à un sous-ensemble dans l'ensemble de VAS ;
- une réception à partir d'une autre entité de réseau d'un rapport de mesure associé à l'ensemble de VAS ;
- dans lequel chaque clé de facturation secondaire est en outre dépendante :
- d'un statut de consommation de VAS indiquant une durée et/ou un volume de trafic qui ont été consommés par le trafic utilisateur par rapport à chaque VAS dans le sous-ensemble associé,
- d'un statut de sponsor de VAS de chaque VAS dans le sous-ensemble associé, et/ou
- d'une politique de fourniture de service de chaque VAS dans le sous-ensemble associé, et
- d'une adaptation de la politique de facturation de VAS sur la base du rapport de mesure associé au statut de consommation, dans lequel chacune de la pluralité de clés de facturation est basée sur le statut de consommation de VAS par rapport à chaque VAS dans le sous-ensemble de VAS.

2. Procédé (200) selon la revendication 1, dans lequel le rapport de mesure indique une durée et/ou un volume de trafic qui ont été consommés par le trafic utilisateur par rapport à chaque VAS dans l'ensemble ou un événement de facturation associé à chaque VAS dans l'ensemble.

3. Procédé (200) selon l'une quelconque des revendications 1-2, dans lequel la politique de facturation de VAS comprend en outre un système de facturation en ligne et/ou hors ligne pour l'ensemble de VAS.

4. Procédé (200) selon la revendication 3, dans lequel le système de facturation en ligne et/ou hors ligne comprend un ou plusieurs systèmes de facturation secondaires, chacun associé à un sous-ensemble de l'ensemble de VAS.

5. Procédé (200) selon l'une quelconque des revendications 1-4, dans lequel la politique de facturation de VAS comprend un identificateur (ID) de politique de facturation de VAS.

6. Procédé (200) selon l'une quelconque des revendications 1-5, dans lequel la politique de facturation de VAS comprend des informations de description de trafic associées au trafic utilisateur.

7. Procédé (200) selon l'une quelconque des revendications 1-6, dans lequel l'entité de réseau est une entité de fonction de règles de politique et de facturation (PCRF).

8. Procédé (200) selon la revendication 1, dans lequel l'autre entité de réseau est une entité de fonction d'application de politique et de facturation (PCEF), une entité de fonction de détection de trafic (TDF) ou un contrôleur de mise en réseau définie par logiciel (SDNC).

9. Entité de réseau (600) pour une commande de facturation pour un service à valeur ajoutée (VAS), comprenant :
- une unité de détermination (610) configurée pour déterminer un statut de fourniture de VAS associé à un trafic utilisateur, le statut de fourniture de VAS indiquant un ensemble de VAS fourni pour le trafic utilisateur ; et
- une unité de génération (620) configurée pour générer une politique de facturation de VAS pour facturer un compte utilisateur pour le trafic utilisateur sur la base du statut de fourniture de VAS ;
- dans laquelle la politique de facturation de VAS comprend une clé de facturation pour l'ensemble de VAS ;
- dans laquelle la clé de facturation comprend une ou plusieurs clés de facturation secondaires, chacune associée à un sous-ensemble dans l'ensemble de VAS ;
l'entité de réseau (600) comprenant en outre :
- une unité de réception configurée pour recevoir à partir d'une autre entité de réseau un rapport de mesure associé à l'ensemble de VAS ;
- dans laquelle chaque clé de facturation secondaire est en outre dépendante :
- d'un statut de consommation de VAS indiquant une durée et/ou un volume de trafic qui ont été consommés par le trafic utilisateur par rapport à chaque VAS dans le sous-ensemble associé,
- d'un statut de sponsor de VAS de chaque VAS dans le sous-ensemble associé, et/ou
- d'une politique de fourniture de service de chaque VAS dans le sous-ensemble associé, et
- d'une unité d'adaptation configurée pour adapter la politique de facturation de VAS sur la base du rapport de mesure associé au statut de consommation, dans laquelle chacune de la pluralité de clés de facturation est basée sur le statut de consommation de VAS par rapport à chaque VAS dans le sous-ensemble de VAS.

10. Entité de réseau (600) selon la revendication 9, dans laquelle le rapport de mesure indique une durée et/ou un volume de trafic qui ont été consommés par le trafic utilisateur par rapport à chaque VAS dans l'ensemble ou un événement de facturation associé à chaque VAS dans l'ensemble.

11. Entité de réseau (600) selon l'une quelconque des revendications 9-10, dans laquelle la politique de facturation de VAS comprend en outre un système de facturation en ligne et/ou hors ligne pour l'ensemble de VAS.

12. Entité de réseau (600) selon la revendication 11, dans laquelle le système de facturation en ligne et/ou hors ligne comprend un ou plusieurs systèmes de facturation secondaires, chacun associé à un sous-ensemble de l'ensemble de VAS.

13. Entité de réseau (600) selon l'une quelconque des revendications 9-12, dans laquelle la politique de facturation de VAS comprend un identificateur (ID) de politique de facturation de VAS.

14. Entité de réseau (600) selon l'une quelconque des revendications 9-13, dans laquelle la politique de facturation de VAS comprend des informations de description de trafic associées au trafic utilisateur.

15. Entité de réseau (600) selon l'une quelconque des revendications 9-14, dans laquelle l'entité de réseau est une entité de fonction de règles de politique et de facturation (PCRF).
